# EUROPEAN PATENT SPECIFICATION

(11) **EP 2 851 448 B1**
(45) Date of publication and mention of the grant of the patent: **05.09.2018**
(21) Application number: 14175280.8
(22) Date of filing: 01.07.2014
(51) Int. Cl.: C22C 38/00, C22C 38/04, C22C 38/44, C22C 38/58, G01L 1/04, G01L 1/26, C22C 38/02, C21D 8/00, C22C 14/00, C22C 19/07, C22C 30/00, G01L 9/00, C21D 9/00, G01L 19/06, C21D 6/00

(54) **Two-phase stainless steel, thin sheet material and diaphragm using two-phase stainless steel**
Zweiphasiger Edelstahl, dünnes Blechmaterial und Membran mit zweiphasigem Edelstahl
Acier inoxydable à deux phases, matériau en feuille mince et diaphragme utilisant l'acier inoxydable à deux phases

(30) Priority: 19.09.2013 JP 2013194313
(43) Date of publication of application: 25.03.2015
(73) Proprietor: Seiko Instruments Inc., Chiba-shi, Chiba (JP)
(72) Inventor: Otomo, Takuma, Chiba-shi, Chiba (JP)
(74) Representative: Miller Sturt Kenyon

(56) References cited:
- EP-A1- 0 545 753
- EP-A1- 0 599 654
- EP-A1- 2 500 444
- WO-A1-03/080886
- WO-A1-2012/121232
- Si Mn ET AL: "NAS 64 (UNS S32506) NAS High Corrosion Resistant Duplex Stainless Steel Steel Grade/Standard Chemical Composition Physical Properties NAS JIS G4304/4305 ASTM A240 EN NAS 64 SUS 329J4L UNS S32506 - [wt %]", , 16 May 2012 (2012-05-16), page 30, XP055181628, Retrieved from the Internet: URL:http://www.nyk.co.jp/en/pdf/products/a lloys/NAS_64_E.pdf [retrieved on 2015-04-08]
- OGAWA K ET AL: "EFFECTS OF TUNGSTEN ON PITTING CORROSION RESISTANCE AND IMPACT TOUGHNESS IN THE HAZ OF DUPLEX STAINLESS STEEL - STUDY OF WELDABILITY OF HIGH-TUNGSTEN DUPLEX STAINLESS STEEL (1ST REPORT)", WELDING INTERNATIONAL, TAYLOR & FRANCIS, ABINGDON, GB, vol. 10, no. 6, 1 January 1996 (1996-01-01), pages 466-472, XP000593558, ISSN: 0950-7116

## Description

### BACKGROUND OF THE INVENTION

### 1. Field of the Invention

The present invention relates to a two-phase stainless steel, a thin sheet material and a diaphragm using the two-phase stainless steel.

### 2. Description of Related Art

In industrial processes using fluid frequently, various types of processes are controlled based on pressures measured at critical control points. In these critical control points, a mechanical quantity obtained from process fluid is converted into a pressure value to be used for process control. The load to be applied on a sensor device which measures pressures is not always constant, and materials for the sensor device require excellent mechanical characteristics.

For example, a load state is in a certain fixed load while the process fluid flows, however, the load changes rapidly at the beginning of flow or at the end of flow. As the temperature range of process fluid becomes wide depending on the process, thermal shock due to rapid temperature change may affect the sensor device. The sensor device is also exposed to a severe environment chemically. For example, most process fluids have perishability, a coagulation property and a corrosion property, and it is required to provide a chemically stable sensor device under such environment. Accordingly, the strength and corrosion resistance of materials for the sensor device are important parameters in design for maintaining the operation of the sensor device to be stable for a long period of time.

The pressure of the process fluid is detected by measuring elastic deformation volume of the sensor device. The accuracy of pressure detection is maintained by returning the deformation volume to a zero point after unloading. There is a sensor device in which a strain gauge is adhered by an adhesive for measuring the elastic deformation volume. However, as an adhesion state is changed due to aged deterioration of the adhesive, measurement error occurs. In order to obtain the stable accuracy for a long period of time, a method of using the sensor device itself as the strain gauge is performed.

In this method, the strain gauge is constructed by forming a deposition film on a surface of the sensor device. As the detection accuracy of the sensor device depends on the quality of the deposition film to be formed on the strain gauge, it is indispensable that the surface of the sensor device has an extremely smooth mirror-surface state.

In related art, as an example of a pressure sensor having a metallic measuring diaphragm arranged so that one face thereof contacts a fluid to be measured, there is provided a pressure sensor including an insulation thin film, a thin-film strain gauge and an electrode-pad thin film and a lead wire on the other face of the diaphragm (refer to JP-A-2008-190866 (Patent Document 1)).

Moreover, there is also provided a pressure sensor including a diaphragm as a strain generation portion at part of a cylindrical rigid portion, and having a thin film resistance and an electrode thin film provided with an electrode pad portion, provided on one surface side of the diaphragm through an insulating film, in which the electrode pad portion has a bonding area for external connection and a probe area for inspection (refer to JP-A-2005-249520 (Patent Document 2)).

In order to add a strain detection function to a metal diaphragm, two types of structures are generally applied. The first structure is a structure in which the strain gauge is adhered to an opposite surface of a wetted surface of the metal diaphragm, and the second structure is a structure in which the metal diaphragm itself is used as a strain device. In either structure, it is necessary to smooth out the surface of the metal diaphragm to improve the accuracy of strain detection. Accordingly, the surface of the diaphragm is finished in a smooth surface such as a mirror surface through various polishing processes.

Therefore, when considering a diaphragm material of the pressure sensor, it is important to select a material which can realize corrosion resistance and pressure resistance in consideration of use environment, that is, an advantageous material in consideration of convenience in manufacture at the time of assembling the pressure sensor.

In the above diaphragm for the pressure sensor, it is necessary to process the diaphragm so as not to have surface unevenness by performing smoothing processing such as mirror surface processing for obtaining high strain detection accuracy.

However, there is a problem that it is difficult to stably obtain a mirror surface state required for the sensor device in metal materials which are generally distributed. That is because, when a metal material containing inclusions in a structure is polished, the inclusions protrude or fall off and it is difficult to obtain the smooth mirror surface state.

For example, as inclusions included in the metal material are derived from impurities unavoidably mixed in manufacturing processes of the metal material, the density and distribution status of inclusions differ according to an acceptance material. Accordingly, it is difficult to perform mirror surface processing stably. Furthermore, as inclusions are distributed inside the metal material, it is practically unthinkable to geometrically select a surface not including the inclusions.

Therefore, there is a problem that it is difficult to obtain the required mirror surface state only by improving polishing conditions as inclusions are inevitably included in metal materials generally distributed.

For example, when inclusions are included in the diaphragm, the toughness of a pressure receiving portion of the sensor device is reduced. If the strain gauge can be constructed by avoiding the inclusions, there exist inclusions inside the pressure receiving portion of the diaphragm. The pressure receiving portion of the sensor device is formed to be thin so as to sensitively respond to a pressure change, and a thickness thereof is approximately several dozen µm to several hundred µm. On the other hand, the size of inclusions is approximately several µm to ten-odd µm, sometimes several dozen µm at the maximum.

The inclusions are intermetallic compounds, oxides and sulfides, most of which differ from the matrix in mechanical characteristics. Accordingly, it is difficult to keep the mechanical continuity in an interface between the matrix and inclusions, and there is a danger of destruction starting from the interface between the inclusions and the matrix. Accordingly, the inclusions can be fetal defects in the pressure receiving portion of the diaphragm with a thin wall thickness.

As the metal material having inclusions inside makes an electrochemically nonuniform structure, corrosion speed is increased. The inclusions have an electropositive potential as compared with the matrix in many cases, and microcells are constructed by the matrix and inclusions. That is, it is considered that the diaphragm is liable to be corroded in the case where the diaphragm includes inclusions inside even when a material with high corrosion resistance is used for the diaphragm of the sensor device. In this case, the microcells are cancelled when the corrosion of the matrix proceeds and the inclusions fall off, therefore, the corrosion is temporarily stopped. However, as the inclusions are distributed in the metal material, microcells are constructed again on the surface of the metal material when inclusions newly appear on the surface, as a result, the corrosion proceeds. Accordingly, it is considered that the corrosion resistance expected in the metal material is not exerted sufficiently due to the existence of inclusions.

There has been provided various types of metal materials according to applications as materials for the sensor device in the past. Austenitic stainless steel and precipitation stainless steel are practically used for a general-purpose sensor device. Furthermore, Co-based, Ni-based and Ti-based non-ferrous metal materials are used under specific environment in which corrosion resistance higher than stainless steel is necessary.

As a reason why various types of alloy materials are applied, elastic deformability and corrosion resistance are material characteristics which are dependent on the alloy system, and selection of materials in accordance with specifications is still an important parameter in consideration of design. However, inclusions are impurities unavoidably mixed in manufacturing processes of the material and are not always effective objects for characteristics in a material technology. It is rather possible to expect that original characteristics of the material can be brought out by removing the inclusions. Additionally, the mirror surface state on the surface of the device affects the quality of the sensor regardless of the type of alloys in the process of sensor device. Accordingly, it can be considered that good mirror surface state can be easily obtained by changing the material from the related-art material to a new material not including inclusions. Therefore, it is expected that a high-quality sensor device can be efficiently provided in accordance with wide-ranging specifications by preparing alloys from which inclusions are removed.

### SUMMARY OF THE INVENTION

The present invention has been made in view of the above related-art problems, an object of the present invention is to provide a two-phase stainless steel, a thin sheet material and a diaphragm using the two-phase stainless steel, which are suitably used in a state of reduced thickness, used as a pressure receiving portion and used in a smoothed state by mirror surface processing and so on such as a diaphragm in a sensor device.

In order to solve the above problems, there is provided a two-phase stainless steel according to claim 1.

In the present invention, the number of inclusion particles may be 100 or less per 1 mm².

In the present invention, 0.2% proof stress may be 600 MPa or more.

According to the present invention, there is provided a thin sheet material including the two-phase stainless steel according to any one of the above.

According to the present invention, there is provided a diaphragm including the two-phase stainless steel according to any one of the above.

According to the present invention, it is possible to provide the two-phase stainless steel containing prescribed amounts of Cr, Mo, Ni, C and N and having excellent strength and corrosion resistance, capable of obtaining a smooth surface only having inclusion particles including an Al oxide and a Mn oxide caused by unavoidable impurities with the maximum particle size of 3 µm or less. Accordingly, mirror surface processing can be realized with high accuracy as well as efficiency of mirror surface processing can be improved.

As the number of inclusion particles is 100 or less per 1 mm², the strength reduction due to inclusion particles does not occur, and the two-phase stainless steel with excellent corrosion resistance can be provided.

Moreover, as 0.2% proof stress is 600 MPa or more, excellent strength can be obtained.

In the thin sheet material including the two-phase stainless steel according to the invention, strength reduction caused by inclusions does not occur easily even when a plate thickness is thin, and it is possible to provide the thin sheet material having excellent corrosion resistance and a good surface state in which unevenness is not generated on the surface even after the mirror surface processing is performed.

In the diaphragm including the two-phase stainless steel according to the invention, strength reduction caused by inclusions does not occur easily even when a plate thickness is thin, and it is possible to provide the diaphragm having excellent corrosion resistance and a good surface state in which unevenness is not generated on the surface even after the mirror surface processing is performed.

### BRIEF DESCRIPTION OF THE DRAWINGS

Embodiments of the present invention will now be described by way of further example only and with reference to the accompanying drawings, in which:
Fig. 1 is a schematic cross-sectional view showing a diaphragm as an example of a thin sheet material made of a two-phase stainless steel according to an embodiment of the present invention;
Fig. 2 is a schematic cross-sectional view showing a pressure sensor including the diaphragm as the example of the thin sheet material according to the embodiment of the present invention;
Fig. 3 is a schematic cross-sectional view showing a diaphragm valve including the diaphragm as the example of the thin sheet material according to the embodiment of the present invention;
Figs. 4A and 4B show another example of the pressure sensor including the diaphragm as the example of the thin sheet material according to the embodiment of the present invention, in which Fig. 4A is a horizontal cross-sectional view and Fig. 4B is a plan view;
Fig. 5A is a view showing an observation area of a round bar as a specimen, Fig. 5B is a micrograph showing inclusions extended in a longitudinal direction, Fig. 5C is a view showing a result of element mapping of inclusions with respect to aluminum and Fig. 5D is a view showing element mapping of inclusions with respect to oxygen;
Figs. 6A and 6B show the two-phase stainless steel to which mirror surface processing is performed, in which Fig. 6A is a micrograph showing a mirror surface made of a related-art two-phase stainless steel and Fig. 6B shows a micrograph showing a mirror surface made of the two-phase stainless steel according to the present invention.
Figs. 7A and 7B show tensile fracture surfaces of two-phase stainless steel specimens according to the present invention, in which Fig. 7A shows a fracture surface of a related-art two-phase stainless steel and Fig. 7B shows a fracture surface of the two-phase stainless steel according to the present invention;

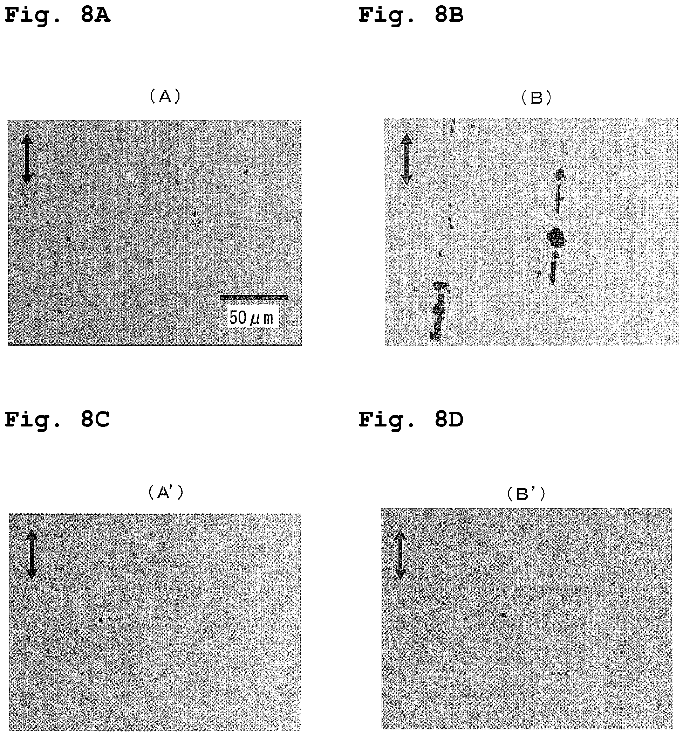

Figs. 8A to 8D show backscattered electron images of the two-phase stainless steel, in which Fig. 8A is a micrograph of a backscattered electron image as an example of a related-art two-phase stainless steel specimen, Fig. 8B is a micrograph of a backscattered electron image as another example of a related-art two-phase stainless steel specimen, Fig. 8C is a micrograph of a backscattered electron image as an example of a two-phase stainless steel specimen according to the present invention and Fig. 8D is a micrograph of a backscattered electron image as another example of a two-phase stainless steel specimen according to the present invention;
Fig. 9 is an explanatory chart collectively showing backscattered electron images and results of element mapping of the two-phase stainless steel specimens according to the present invention and the related-art two-phase stainless steel specimens;
Fig. 10 is a graph showing the relation between stress and strain in the two-phase stainless steel specimens according to the present invention and the related-art two-phase stainless steel specimens;
Figs. 11A and 11B show measurement results of pitting potentials in the two-phase stainless steel specimens according to the present invention and the related-art two-phase stainless steel specimens, in which Fig. 11A is a graph showing results obtained by measurement in an 3.5% NaCl solution at 30°C, and Fig. 11B is a graph showing results obtained by measurement in an 3.5% NaCl solution at 40°C;
Fig. 12 is a graph showing an example of work hardened states corresponding to surface reduction rates obtained when swaging processing is performed to the two-phase stainless steel specimen and a Co-NI alloy specimen;
Fig. 13 is a graph showing the relation between the hold time at 350°C and the hardness change rate in a specimen obtained by performing swaging processing to the two-phase stainless steel with a processing rate 83% and in a specimen to which the swaging processing is not performed;
Fig. 14 is a graph showing the relation between stress and strain of two-phase stainless steel specimens processed in optimization conditions;
Fig. 15 is a graph showing results of a tensile test of respective specimens of Ti alloy, stainless steel and two-phase stainless steel;
Figs. 16A and 16B show scanning electron micrographs of fracture surfaces obtained by the tensile test of a Ti-alloy specimen, in which Fig. 16A is a micrograph with a magnification 1000 times and Fig. 16B is a micrograph with a magnification 2000 times;
Figs. 17A and 17B show scanning electron micrographs of fracture surfaces obtained by the tensile test of a Ti-alloy specimen (ELI material), in which Fig. 17A is a structure micrograph with a magnification 1000 times and Fig. 17B is a structure micrograph with a magnification 5000 times;
Figs. 18A and 18B show scanning electron micrographs of fracture surfaces obtained by the tensile test of stainless steel specimens, in which Fig. 18A is a structure micrograph of a SUS316L specimen with a magnification 1000 times and Fig. 18B is a structure micrograph of a SUS316L* specimen from which inclusions are removed with a magnification 1000 times;
Figs. 19A and 19B show scanning electron micrographs of fracture surfaces obtained by the tensile test of two-phase stainless steel specimens, in which Fig. 19A is a structure micrograph of a SUS329J4L specimen with a magnification 1000 times and Fig. 18B is a structure micrograph of a SUS329J4L** specimen from which inclusions are removed with a magnification 1000 times.

### DESCRIPTION OF EMBODIMENTS

Hereinafter, a diaphragm made of a two-phase stainless steel and a pressure sensor including the diaphragm according to an embodiment of the present invention will be explained.

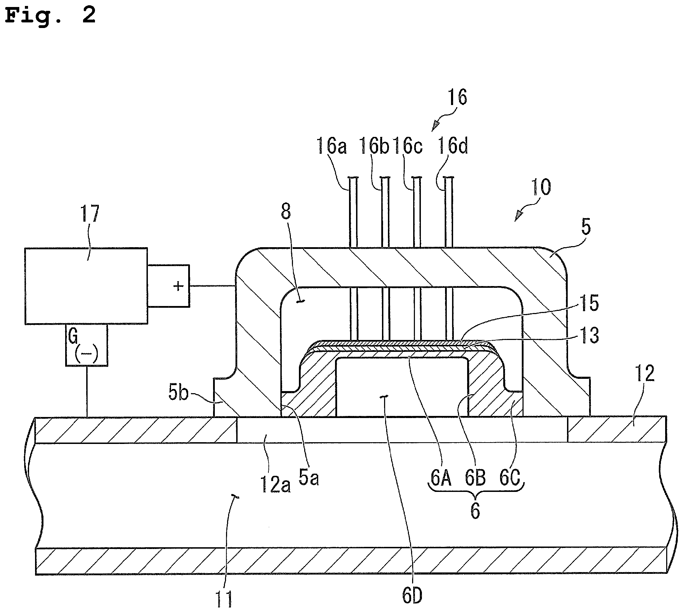

A diaphragm 1 according to the embodiment can apply a structure as one form, which includes a dome portion 2 with a partial spherical shape (dome shape) having a curvature radius, in which a central portion is swelled to an upper side, and a flange portion 4 continuously formed to a circumferential edge of the dome portion 2 through a boundary portion 3. The diaphragm 1 in this form is attached to a pipe and the like in a state of being housed in a not-shown casing and deformed by receiving pressure of fluid flowing inside the pipe, which is used for measurement of the fluid pressure and so on. An example in which such diaphragm is applied to the pressure sensor is shown in Fig. 2.

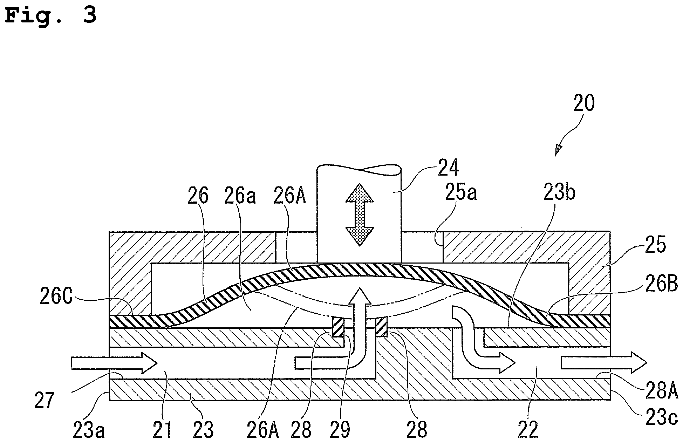

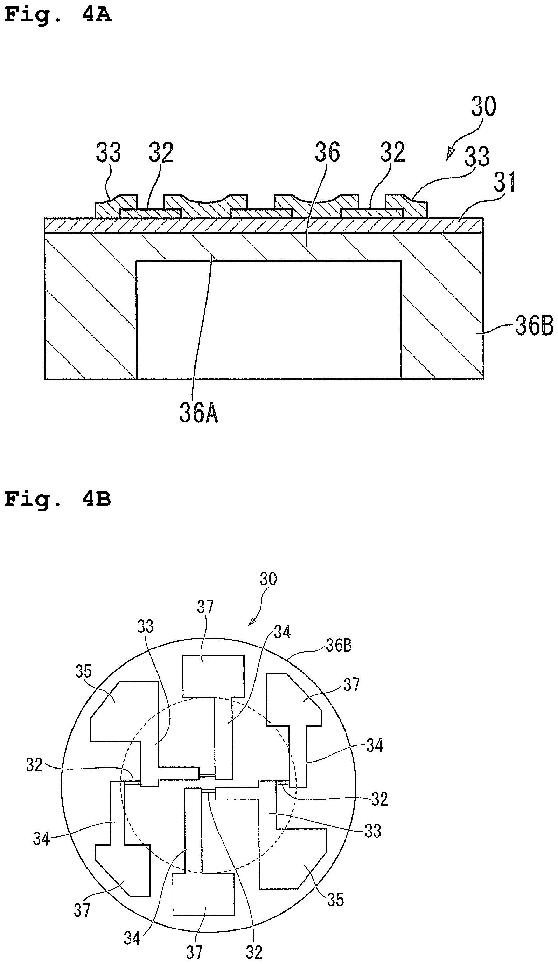

The above diaphragm is used for a diaphragm valve and so on, which is housed in the not-shown casing and so on and opening/closing a flow path inside the casing. An example in which the diaphragm is applied to the diaphragm valve is shown in Fig. 3. When a strain gauge is formed on the diaphragm through an insulating layer, a device can be used as the pressure sensor. An example in which the diaphragm is applied to the pressure sensor including the strain gauge is shown in Fig. 4.

The application examples of the diaphragm are not limited to the above and various examples can be considered. In any of these examples, the diaphragm is made of later-described two-phase stainless steel, which is characterized in that high rigidity can be achieved, corrosion resistance is excellent and a smooth surface state (mirror surface) can be obtained.

As a two-phase stainless steel forming the diaphragm 1, it is possible to apply a two-phase stainless steel having the composition of Cr: 24 to 26 mass %, Mo: 2.5 to 3.5 mass%, Ni: 5.5 to 7.5 mass %, C≤0. 03 mass %, N: 0.08 to 0.3 mass %, remaining part: Fe and unavoidable impurities. It is also preferable to add Mn: 2.0 mass% or less as another additive element to the two-phase stainless steel in addition to the above composition, and it is further preferable to contain Si≤1.0 mass %.

Concerning the range of the component content in the embodiment, the upper limit and the lower limit are included when not being particularly noted. Therefore, Cr: 24 to 26 mass % means that 24 mass % or more and 26 mass % or less of Cr is included.

The two-phase stainless steel forming the diaphragm 1 takes on a two-phase structure in a range in which the ratio between an austenite phase and a ferrite phase is close, having the above composition ratio. However, it is not necessary that the ratio between the austenite phase and the ferrite phase is the same, and it is sufficient that the structure includes two phases. The reason of limiting respective components will be explained below.

Cr (chromium): Cr is necessary for forming a stable passive film which is necessary for protection from atmospheric corrosion, and 20 mass % or more is necessary as the two-phase stainless steel, however, approximately 24 to 26 mass % is necessary for achieving an object in the diaphragm 1 of the embodiment.

Mo (molybdenum): Mo assists Cr to give pitting corrosion resistance to stainless steel. When stainless steel containing the above range of Cr is allowed to contain approximately 2.5 to 3.5 mass % of Mo, resistance for pitting corrosion or crevice corrosion can be improved as compared with a case of containing only Cr.

N (nitrogen): N increases the pitting corrosion resistance and crevice corrosion resistance of the two-phase stainless steel. N also contributes to the improvement of strength of the two-phase stainless steel, which is an effective element for solid solution reinforcement. As N also contributes to the improvement of toughness, 0.08 to 0.3 mass % is preferably contained.

Ni (Nickel): Ni is necessary for promoting change of a crystal structure of stainless steel from body-centered cubic (ferrite) to face-centered cubic (austenite), contributing to stabilization of the austenite phase and securing workability. Accordingly, 5.5 to 7.5 mass % of Ni is preferably contained.

C (carbon): It is preferable that the carbon content is low for suppressing generation of carbide which may cause brittleness. Therefore, 0.03 mass % or less of C is allowed to be contained. When C exists in the structure in a state of being bonded to Cr, corrosion may occur from a grain boundary, therefore, the C content is preferably low.

It is also preferable that the two-phase stainless steel contains Si≤1.0 mass% and Mn≤2.0 mass % as additive elements. Additionally, approximately 0.5 mass % of other unavoidable impurities may be contained. As unavoidable impurities, P, S, Al and so on can be cited.

In the two-phase stainless steel used in the embodiment, all of the maximum particle sizes of particles of an Al oxide caused by Al contained as an unavoidable impurity, a Mn oxide added to the above or an AIMn composite oxide are set to 3 µm or less. The number of particles of the above oxides is preferably set to 100 or less per 1 mm².

As a method of reducing Al as the unavoidable impurity in the two-phase stainless steel, a process of flocculating oxide particles in molten metal and a process of removing a flocculated part of the oxide particles after solidification are used. The oxide particles in the molten metal are not dissolved in a high frequency melting furnace as the oxide particles are non-magnetic particles and have a higher melting point than the matrix, and are not precipitated as the particles have a lower gravity than the matrix, therefore, the oxide particles are flocculated on an extremely superficial layer. Furthermore, oxide particles can be removed by mechanically cutting off the flocculated part.

A slight amount of Al is contained as the unavoidable impurity in the two-phase stainless steel having the above composition. This is because, Al may be contained in a crucible used for producing an ingot or in fireproof brick and the like as a passage forming member for feeding molten steel when the two-phase stainless steel is manufactured, and further, as Al is also used as a deoxidizing agent at the time of manufacturing molten steel, Al is unavoidably contained in the manufacturing process of the two-phase stainless steel.

In the two-phase stainless steel, plastic forming such as swaging processing or rolling processing is performed in either of a case of being used in a thin sheet shape and a case of being used in a wire shape. In the case where the two-phase stainless steel is plastic-deformed by the above processing, the hard and fragile Al oxide is broken by the plastic working and is aligned in a processing direction as the matrix is extended. As a result, defects which are extended in the processing direction are formed.

Accordingly, when mirror surface processing is performed to the two-phase stainless steel as a thin sheet, the surface unevenness due to inclusions caused by the Al oxide becomes conspicuous. As the bonding force between Mn and Al is high, an AIMn composite oxide may be generated, therefore, the unevenness due to inclusions caused by the AIMn composite oxide appears. When soft inclusions are extended in the processing direction with the deformation of the matrix, the inclusions may cause the unevenness on the surface of the thin sheet material at the time of the mirror surface process depending on the processing state.

It is preferable that inclusions such as the Al oxide are smaller than a certain size for reducing the unevenness due to the inclusions in the present invention. In the two-phase stainless steel used in the embodiment, all of the maximum particle sizes of particles of the Al oxide and Mn oxide, or the AIMn composite oxide are set to 3 µm or less.

Mn contained in the two-phase stainless steel will be explained. In a steel type in which Mn is added to the two-phase stainless steel, Mn is added for the purpose of stabilizing austenite, therefore, Mn added within the above range is assumed to be a solid solution state. On the other hand, it can be considered that Mn forming composite oxide particles in the embodiment is mainly Mn which has been added for deoxidization or desulfurization at the time of molten metal processing. The Mn reacts with oxygen at the very beginning after the addition, is not dissolved in the matrix and exists in the material in particles, which will be a base of the above composite oxide particles.

In the two-phase stainless steel with the above composition, an ingot is produced from an alloy molten metal with the above composition and processing is performed from a slab into a target shape such as a disk shape or dome shape to thereby obtain a diaphragm by using common methods such as forging, hot rolling, cold rolling and swaging processing.

In order to achieve the object of the embodiment, it is possible to use the stainless steel obtained by performing processing with a surface reduction rate of 50% or more, or a surface reduction rate of 80% or more by using cold processing such as cold swaging processing, then, by performing annealing.

It is also possible to perform aging heat treatment to the two-phase stainless steel with the above composition at 300 to 500°C. When the aging treatment is performed, age hardening is performed to the two-phase stainless steel to thereby obtain a two-phase stainless steel with excellent corrosion resistance having a high resistance of 1300 MPa to 1700 MPa at 0.2% proof stress. In the case where the aging heat treatment is performed after the two-phase stainless steel is processed to the shape of the diaphragm by using the above processing, the diaphragm with excellent corrosion resistance having the high resistance of 1300 MPa to 1700 MPa at 0.2% proof stress can be obtained.

The age hardening of the two-phase stainless steel has not been known in the past, and the present inventor has found the phenomenon. When the two-phase stainless steel with the above composition ratio is aged by performing heat treatment at a temperature exceeding 500°C, for example, at 650°C, elongation after fracture is not obtained and brittle fracture occurs in a tensile test just after elastic deformation is finished, though the resistance and tensile strength are improved. Additionally, when the heat treatment temperature is low at approximately 200°C, a percentage of age hardening is low, and the rigidity is reduced to be lower than the rigidity at room temperature according to a condition of the surface reduction rate.

Accordingly, the heat treatment temperature is preferably within a range of 300 to 500°C and more preferably within a range of 350 to 500°C. When the above aging heat treatment is effectively operated, the two-phase stainless steel with 1500 MPa or more can be obtained.

Fig. 2 shows a structure of a pressure sensor to which the diaphragm made of the above two-phase stainless steel according to the embodiment is applied.

A pressure sensor 10 shown in Fig. 2 includes a cap member 5 having a lead-in path for leading fluid as a target for pressure measurement and a diaphragm 6 integrally formed inside the cap member 5. The diaphragm 6 includes a thin-walled pressure receiving portion 6A, a cylindrical portion 6B extending so as to surround an outer peripheral edge of the pressure receiving portion 6A and a flange portion 6C formed at an outer periphery of the cylindrical portion 6B, in which an internal space of the cylindrical portion 6B is a pressure chamber 6D.

The cap member 5 is formed in a cup shape having an opening 5a, including a flange portion 5b on the outer peripheral side of the opening 5a, in which an inner periphery of the opening 5a is bonded to the flange portion 6C of the diaphragm 6. The cap member 5 is made of metal, or a composite material of metal and resin. A reference pressure chamber 8 is formed inside the cap member 5 so as to be separated by the cap member 5 and the diaphragm 6. The lead-in path (not shown) for leading a reference gas is formed in the cap member 5. The reference gas is led from the lead-in path to thereby control an inner pressure of the reference pressure chamber 8.

As shown in Fig. 2, when the pressure sensor 10 is attached to the periphery of an opening 12a formed in an peripheral wall of a pipe 12 forming a flow path 11 of a measurement target, and the fluid of the pipe 12 is led into the pressure chamber 6D of the diaphragm 6, the pressure receiving portion 6A is configured to be deformed by receiving a pressure of the fluid.

In the pressure receiving portion 6A of the diaphragm 6, a surface facing the reference pressure chamber 8 is processed to be a smooth surface, for example, a mirror surface, on which an insulating film 13 such as a silicon oxide film and a bridge circuit 15 are formed. The bridge circuit 15 includes not-shown four strain gauges, in which wirings 16 such as connector wirings 16a, 16b, 16c and 16d are connected to respective strain gauges.

When the fluid pressure of the pipe 12 is applied to the pressure chamber 6D by leading the reference gas into the reference pressure chamber 8, the pressure receiving portion 6A of the diaphragm 6 is deformed and resistances of four strain gauges are changed by the deformation, therefore, resistance variations can be measured by the bridge circuit 15 and the pressure of the pressure chamber 6D can be detected by calculating measurement results. However, the pressure receiving portion 6A has a thin wall and directly receives the fluid pressure, therefore, it is necessary that a metal material forming the pressure receiving portion 6A of the diaphragm 6 has high strength and excellent corrosion resistance.

When the pipe 12 is for use in the field of food and drugs and so on, a nonoxidative acid washing may be used for maintaining hygienic conditions of the pipe 12. In the case where a cathodic protection is applied and a particular potential is applied to the pipe 12 to take anti-corrosion measures for preventing the corrosion of the pipe, a power source 17 is connected to the pressure sensor 10 and the pipe 12. An earth side (cathode side) of the power source 17 is connected to the pipe 12 and an anode side is connected to the cap member 5 of the pressure sensor 10, then, a potential difference is applied between them.

When the potential difference is generated as described above, the diaphragm 6 is polarized to the anode side according to conditions though cathodic protection of the pipe 12 itself can be performed, as a result, the thin-walled pressure receiving portion 6A of the diaphragm 6 tends to be preferentially corroded. It is necessary that good corrosion resistance is realized in the pressure receiving portion 6A of the diaphragm 6 also in the above case.

A metal material making the pressure receiving portion 6A of the diaphragm 6 requiring high strength and excellent corrosion resistance under corrosion environment to which the cathodic protection is applied preferably includes the two-phase stainless steel with high strength and high corrosion resistance which has the above composition, and to which the removing processing of inclusions has been performed. As the two-phase stainless steel can be uniformly polished without a risk of partial preferential polish even when the surface is polished smoothly such as the mirror surface, which differs from precipitation hardening alloys, therefore, the smooth surface such as the mirror surface can be positively obtained by polishing. To obtain the smooth surface easily will be advantageous when obtaining the pressure sensor with high pressure detection accuracy because the strain gauge can be precisely formed in the case where the pressure receiving portion 6A of the diaphragm 6 is formed by the two-phase stainless steel and the circuit such as the strain gauge is formed on one polished surface of the pressure receiving portion 6A.

As the two-phase stainless steel used in the embodiment sets all of the maximum particle sizes of the Al oxide and the Mn oxide or the AIMn composite oxide to 3 µm or less, there is little risk of having a hole in the diaphragm 6 and there is little unevenness on the surface even when the pressure receiving portion 6A of the diaphragm 6 is processed to be thin in a range of several dozen µm to several hundred µm and processed to the mirror surface and so on by polishing the surface, therefore, the strength and the surface state required for the diaphragm can be obtained. Furthermore, as the number of oxide particles is small, which is 100 or less per 1 mm², there is little risk of having a hole in the diaphragm 6 and there is little unevenness on the surface even when the pressure receiving portion 6A of the diaphragm 6 is processed to be thin and processed to the mirror surface as described above, therefore, the strength and the surface state required for the diaphragm can be obtained.

As the maximum particle size is small and the number of particles is small, the strength required for the diaphragm can be sufficiently obtained even when the pressure receiving portion 6A of the diaphragm 6 is processed to be thin in the range of several dozen µm to several hundred µm and processed to the mirror surface and so on by polishing the surface.

As the diaphragm to which aging heat treatment has been performed by using the two-phase stainless steel to which the aging effect processing has been performed can have excellent strength in a range of 1300 to 1700 MPa at 0.2% proof stress, plastic deformation does not occur in the diaphragm 6 if receiving high pressure from fluid inside the pipe 12 as well as an area of elastic deformation is wide, therefore, highly accurate pressure detection performance can be maintained in a wide pressure range.

Fig. 3 shows an example in which the diaphragm according to the present invention is applied to a diaphragm valve. A diaphragm valve 20 in the example includes a tabular main body 23 in which a first flow path 21 and a second flow path 22 are formed, a diaphragm 26 installed on the main body 23 and a lid body 25 sandwiching the diaphragm 26 with the main body 23. Inside the main body 23, the first flow path 21 reaching the center of an upper surface 23b of the main body 23 from one side surface 23a of the main body 23 and the second flow path 22 reaching the vicinity of the center of the upper surface 23b of the main body 23 from the other side surface 23c of the main body 23 are formed. In the main body 23, a portion where the first flow path 21 opens in one side surface 23a in the main body 23 is a flow-in port 27 and a portion where the second flow path 22 opens in the other side surface 23c in the main body 23 is a flow-out port 28A.

In a portion where the first flow path 21 is communicated in the center of the upper surface of the main body 23, a peripheral step portion 28 is formed, and a valve seat 29 is attached to the peripheral step portion 28. The diaphragm 26 is made of the two-phase stainless steel equivalent to the diaphragm 1 explained above, which is formed in a disk-dome shape having a dome portion 26A, a boundary portion 26B and a flange portion 26C in the same manner as the above-described diaphragm 1.

The diaphragm 26 is sandwiched between the main body 23 and the lid body 25 so that a swelling part of the dome portion 26A faces upward and that a pressure chamber 26a is formed between the diaphragm 26 the upper surface 23b of the main body 23.

Furthermore, a through hole 25a for inserting a stem 24 is formed at the center of an upper surface of the lid body 25, and the stem 24 is arranged so as to contact the center of the upper surface of the diaphragm 26.

The diaphragm valve 20 having the above structure can block the communication between the first flow path 21 and the second flow path 22 by depressing the stem 24 so that the dome portion 26A of the diaphragm 26 is deformed downward as shown by chain double-dashed lines in Fig. 3 and by pressing the dome portion 26A onto the valve seat 29, and allows the first flow path 21 and the second flow path 22 to communicate with each other by pulling the stem 24 upward so that the dome portion 26A of the diaphragm 26 separates from the valve seat 29.

The diaphragm valve 20 can be used as a valve capable of switching between communication and blocking in the first flow path 21 and the second flow path 22 in accordance with the vertical motion of the stem 24.

Also in the diaphragm valve 20 having the above structure, there is an advantage in which the good diaphragm valve 20 can be provided by including the diaphragm 26 having high strength and the corrosion resistance as the diaphragm 26 is made of the above-described two-phase stainless steel.

Figs. 4A and 4B show an example in which the diaphragm according to the present invention is applied to a pressure sensor. A pressure sensor 30 in the example includes a diaphragm 36 having a thin-walled pressure receiving portion 36A made of the two-phase stainless steel at one end side of a cylindrical portion 36B, four pressure-sensitive resistance films 32 formed on the upper surface side of the pressure receiving portion 36A through an insulating layer 31 and six wiring layers connected to these pressure-sensitive resistance films 32. Of the six wiring layers, one side-end portions of two wiring layers 33 are connected to two pressure-sensitive resistance films 32, and terminal connection layers 35 are formed on the other side-end portions of these two wiring layers 33. Each of the pressure-sensitive resistance films 32 is connected to each of one side-end portions of remaining four wiring layers 34, and terminal connection layers 37 are formed on the other end portions of these wiring layers 34. Measuring devices are connected to these terminal connection layers 35 and 37, thereby forming a bridge circuit having four pressure-sensitive resistance films 32, and a pressure applied to the pressure receiving portion 36A can be calculated from resistance variations of respective pressure-sensitive resistance films 32 by using the bridge circuit.

Also in the pressure sensor 30 having the above structure, there is an advantage in which the pressure sensor 30 with high measurement accuracy and excellent corrosion resistance can be provided in the same manner as the pressure sensor 10 in the above embodiment by including the diaphragm 36 having high strength and high withstanding pressure in the pressure receiving portion 36A and excellent corrosion resistance even when the cathodic protection is applied to the pipe and so on as the diaphragm 36 made of the two-phase stainless steel with the small particles of inclusions and the small number of particles of inclusions is included.

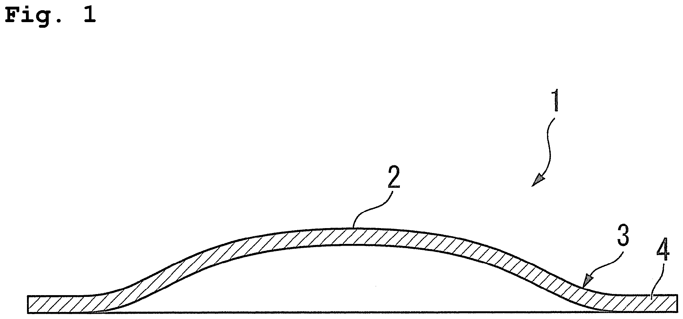

The examples in which the diaphragm made of the above-described two-phase stainless steel is applied to respective diaphragms specific structures of which are shown in Fig. 1 to Figs. 4A and 4B have been explained as the above, however, it goes without saying that the present invention is not a technique to be applied only to the diaphragms having respective structures shown in Fig. 1 to Figs. 4A and 4B, and can be applied to diaphragms of various types of applications.

The two-phase stainless steel in which the maximum particle size of inclusion particles is reduced as well as the number of particles of inclusions is also reduced can be widely applied to not only common thin sheet materials but also thin wires.

The diaphragm according to the present invention is not limited to the shown shapes as the diaphragms are drawn by appropriately adjusting scales and shapes of respective portions of diaphragms for making the drawings easy to be seen in the examples shown in Fig. 1 to Figs. 4A and 4B.

The material from which inclusions are removed or extremely reduced is used in extremely limited fields. For example, in a semiconductor manufacturing process in which extremely clean process environment is required, contaminants generated from metallic pipes were controversial. Accordingly, a method of removing inclusions has been developed especially in stainless steel, which has been the material for piping installation. Additionally, it is necessary to form the diameter of medical wire such as orthodontic wire to be thin, however, there is a problem that the wire is liable to be broken as the diameter of wire becomes small as a fate of the material containing inclusions. Accordingly, an ELI material is used as a biological Ti alloy. As applications of high cleanliness materials are limited, these alloys have not been considered as materials for the sensor device, and most of the movement of development of the material for the sensor device has been performed by focusing attention on improvement of corrosion resistance and the strength. Therefore, the above problems are solved and the sensor with high precision and high corrosion resistance can be provided by applying the two-phase stainless steel from which inclusion particles are removed as in the embodiment.

### Examples

As the two-phase stainless steel, a two-phase stainless steel having a composition ratio of C: 0.021%, Si: 0.42%, Mn: 0.74%, P: 0.031%, S: 0.001%, Ni: 6.65%, Cr: 25.47%, Mo: 3.08%, N: 0.14%, remaining part: Fe and unavoidable impurities was used as a specimen 1 alloy.

As the two-phase stainless steel, a two-phase stainless steel having a composition ratio of C: 0.019%, Si: 0.55%, Mn: 0.68%, P: 0.035%, S: 0.002%, Ni: 6.45%, Cr: 24.44%, Mo: 3.25%, N: 0.12%, remaining part: Fe and unavoidable impurities was used as a specimen 2 alloy.

The specimen 1 alloy and the specimen 2 alloy as commercially distributed materials were individually molten by utilizing characteristics possessed by oxide particles, in which they have a high melting point and a low specific gravity as well as being non-magnetic, then, foreign objects floating in a molten metal surface layer were removed, thereby fabricating a specimen 3 alloy and a specimen 4 alloy as an inclusions-reduced material.

Processing with a surface reduction rate of 80% was performed on these specimens 1, 2, 3, and 4 alloys, being annealed at 1080°C and water-cooled to obtain materials for fabricating test bars respectively. Furthermore, in order to check the effects of inclusions on the material, shapes and types of inclusions were checked, mechanical characteristics were evaluated by a tensile test and electrochemical corrosion resistance was evaluated.

In the check of inclusions, after the specimens were polished by emery paper with a grit size 600, polished by colloidal silica and finished as the mirror surface, then, ultrasonic cleaning was performed to obtain test bars. In the check of shapes of inclusions, observation of backscattered electron images and element mapping were performed at the same time by using an SEM (scanning electron microscope). As the backscattered electron images have atomic number dependence, relative information of the composition can be obtained.

Accordingly, when inclusions in the two-phase stainless steel are nonmetal inclusions such as oxides, they are displayed to be darker than surrounding compositions, and when inclusions are intermetallic compounds such as a α-phase (FeCr-compound phase), they are displayed to be brighter. However, slight defects or extraneous matter on the surface can be misidentified as inclusions due to the angular dependence as well as given information about unevenness of the specimens in the backscattered electron images. Accordingly, in addition to the search of inclusions by the backscattered electron images, the composition of inclusions was checked by the element mapping.

In the tensile test, a round bar to which cold processing has been performed was cut into a rod-shaped test bar, being held at 1080°C to be the test bar. The tensile test was performed at strain speed (2.0E-3 S⁻¹). Then, a fracture surface was observed by the SEM.

The pitting potential was measured for evaluating corrosion resistance. The pitting potential was measured by using a 3.5% NaCl solution at 30°C and 40°C which has been sufficiently deaerated by an inert gas. At that time, a Pt electrode was used as a counter electrode and a saturated NaClAg/AgCl electrode was used as a reference electrode, and potential sweep speed was set to 20 mv/min.

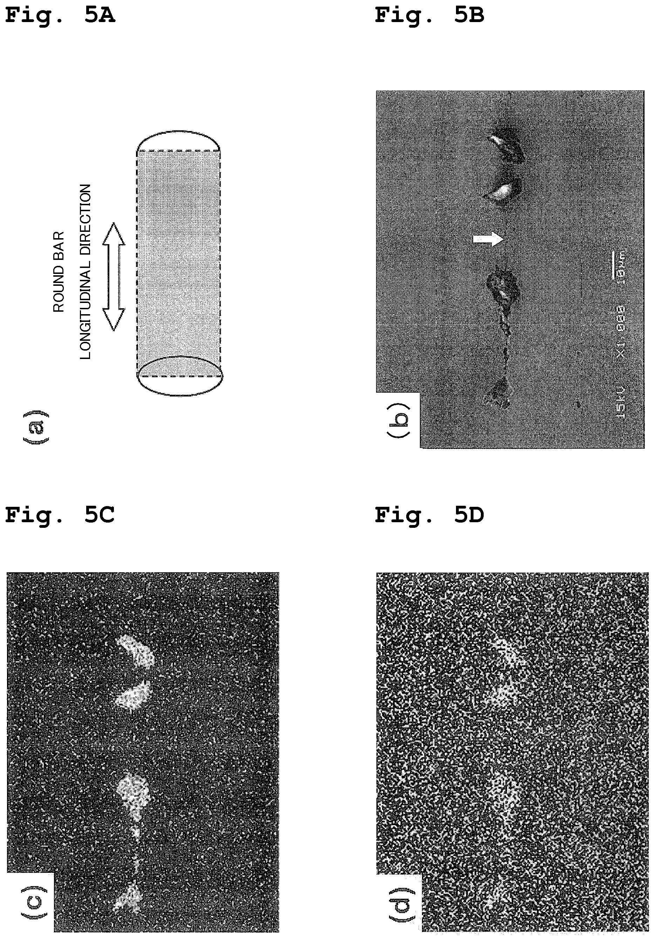

Fig. 5A shows the round bar (φ14) of the specimen 1 alloy to which cold processing has been performed. The longitudinal direction of the round bar is a direction shown by an arrow, and Fig. 5B shows a result obtained by observing part of a longitudinal sectional surface shown in gray in Fig. 5A. Portions imaged as black protrusions or holes are inclusions.

Fig. 5C shows a result of the specimen 1 alloy obtained by performing element mapping by aluminum, and Fig. 5D shows a result obtained by performing element mapping by oxygen. It can be found from these results that inclusions shown in Fig. 5B are Al oxides.

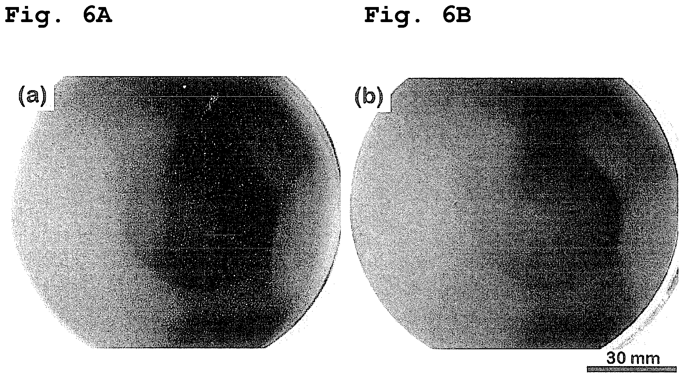

Next, Figs. 6A and 6B show photomicrographs of the specimen 1 alloy and the specimen 3 alloy to which the mirror surface processing has been performed, which were obtained by a stereomicroscope. Fig. 6A shows a photomicrograph of the specimen 1 alloy and Fig. 6B shows a photomicrograph of the specimen 3 alloy, in which a great number of white spots can be seen in the specimen 1 alloy, which shows that there are many inclusions and that the number of inclusions is reduced in the specimen 3 alloy.

The innumerable white spots observed in a visual field of Fig. 6A are defects derived from inclusions and determined to be inclusions, fall-off traces or gaps formed by processing. There is no regularity in distribution of defects, and the defects have been observed uniformly in all area of the visual field. On the other hand, as shown in Fig. 6B, defects are not observed in Fig. 6B showing the photomicrograph of the specimen of the two-phase stainless steel from which inclusions have been removed. That is, it has been confirmed that the formation of defects shown in Fig. 6A was derived from inclusions.

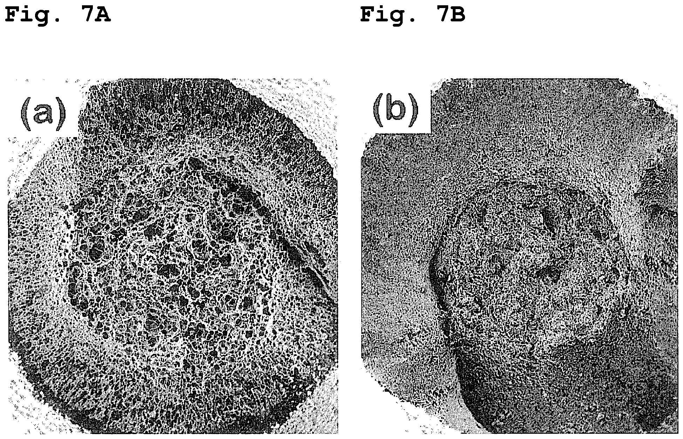

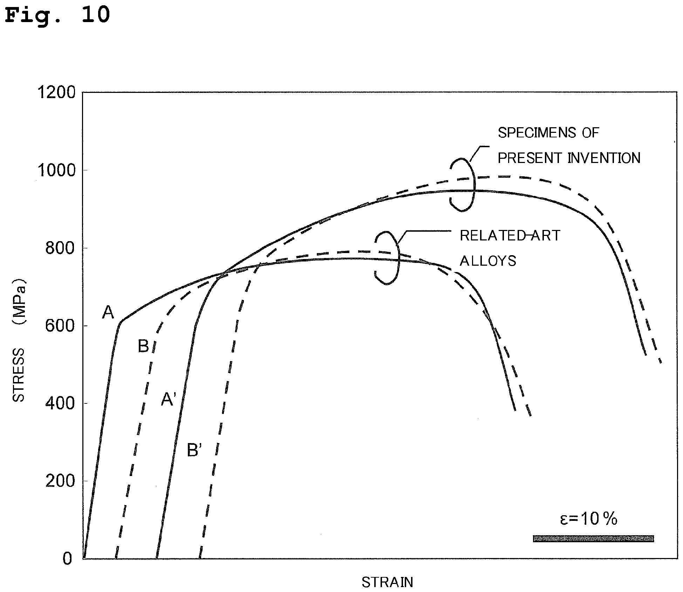

Figs. 7A and 7B are observation photomicrographs of fracture surfaces of the specimen 1 alloy and the specimen 3 alloy after the tensile test. Stress-strain curves obtained by the tensile test will be described later with reference to Fig. 10. The fracture surfaces of respective specimens from which results shown in Fig. 10 have been obtained are shown in Figs. 7A and 7B.

In the specimen shown in Fig. 7A, a shear lip surrounding the center of the fracture surface was observed in common to inclusions-removed materials in the specimen shown in Fig. 7B. Accordingly, a fracture origin is determined to be the center of the specimen. In the specimen shown in Fig. 7A, innumerable voids were observed at the center of the fracture surface. In bottoms of observed plural voids, aluminum oxide particles were observed.

On the other hand, though some voids were observed in the specimen shown in Fig. 7B, the number of voids was extremely smaller than the specimen shown in Fig. 7A. It is known that voids are formed by elongation of a soft matrix due to inclusions in a ductility material. Furthermore, the typical ductility fracture is assumed to occur as the cross-sectional area is reduced by the formation of voids and a stress concentration place is formed. That is, it can be considered that the specimen shown in Fig. 7A has been fractured by the formation of voids which are derived from inclusions in the materials. It can be considered that original mechanical characteristics possessed by the materials are exerted in the specimen shown in Fig. 7B as voids are not formed there.

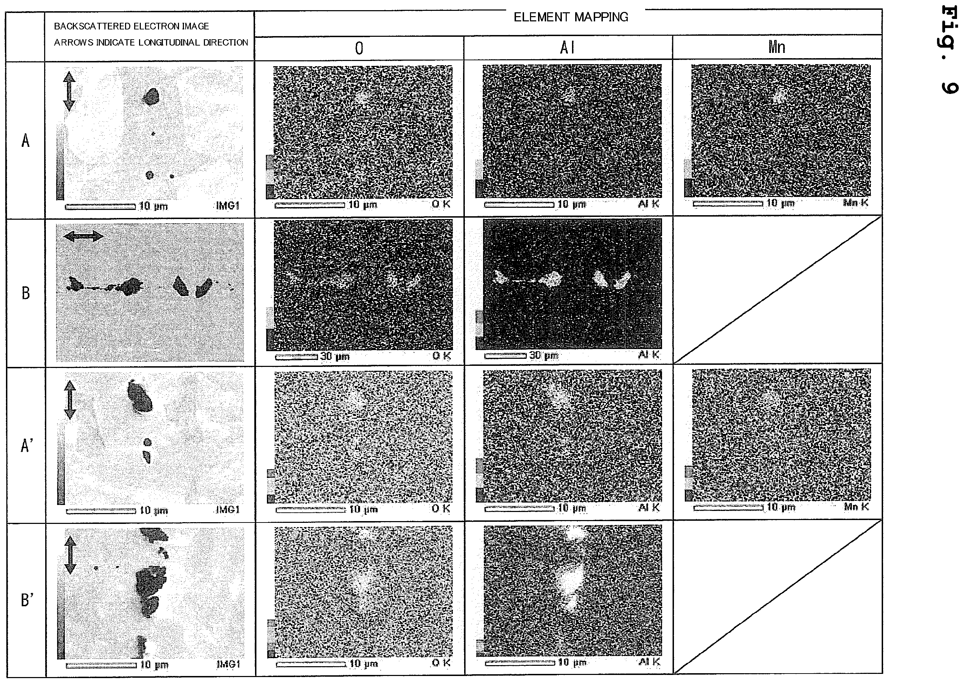

For further investigation, backscattered electron images of the specimens 1 to 4 alloys and results obtained by performing element mapping (O, Al and Mn) are collectively shown in Figs. 8A to 8D and Fig. 9.

Figs. 8A to 8D show backscattered electron images of the two-phase stainless steel of specimens 1 to 4 respectively. As the backscattered electron images have atomic number dependence, relative information of the composition can be obtained. That is, elements having smaller atomic numbers are observed to be darker. Arrows in Figs. 8A to 8D show the longitudinal direction of the round bar. It has been confirmed that inclusions in the specimen 1 alloy and the specimen 2 alloy were sprinkled in parallel to the longitudinal direction of the round bar. In the specimen 3 alloy and the specimen 4 alloy, inclusions sprinkled in parallel to the longitudinal direction were reduced as observation examples, which have been clearly smaller than the specimens 1 and 2 alloys.

In Fig. 9, check results of element analysis of inclusions are collectively arranged. Inclusions have been observed as black spots in the backscattered electron images. It is found that inclusions include light elements as compared with Fe, Cr, Nl and Mo which are main components of the matrix of the two-phase stainless steel. According to the results of element mapping, the inclusions are determined to be oxides of Al or Mn.

Table 1 shown below collectively shows evaluation results of inclusions in materials. A material from which inclusion reduction processing has been performed in the specimen 1 alloy (A)is the specimen 3 alloy (A'), and similarly, a processed material of the specimen 2 alloy (B) is the specimen 4 alloy (B'). Inclusions in the specimens 3 and 4 alloys are smaller as well as the number of inclusions per unit area is smaller than the specimens 1 and 2 alloys. Component elements of inclusions are the same between the specimen 1 alloy and the specimen 3 alloy as well as between the specimen 2 alloy and the specimen 4 alloy, which indicates that correspondence of materials is maintained before and after the reduction processing of inclusions rather than types of inclusions.

Accordingly, a technique in the reduction processing of inclusions performed in the embodiment is characterized not as a technique of selectively removing inclusions but as a technique of setting the size of inclusions to 3 µm or less, preferably 2.5 µm or less, and more preferably 2.3 µm or less.

**Table 1**

| | | Number of inclusions | Size of inclusions | Component elements of inclusions |
|---|---|---|---|---|
| | | (number/mm²) | (µm) | |
| Specimen 1 | A | 976 | 3.6±0.2 | Al, Mn (oxide) |
| Specimen 2 | B | 159 | 10.1±0.7 | Al (oxide) |
| Specimen 3 | A' | 68 | up to 2.0±0.3 | Al, Mn (oxide) |
| Specimen 4 | B' | 28 | up to 1.5±0.3 | Al (oxide) |

Fig. 10 shows stress-strain curves obtained from the tensile test results of the specimens 1, 2 alloys and the specimens 3, 4 alloys (inclusions-reduced materials). Table 2 shows tensile characteristics obtained by the test. It has been found that the strength of materials of the specimens 3 and 4 alloys (inclusions-reduced materials) has been improved.

These specimens had the same structure, which were all obtained by performing cold swaging processing, then, by performing annealing. The specimens 3 and 4 alloys have higher strength and higher elongation than the specimens 1 and 2 alloys. The results indicate that the toughness of materials has been improved by removing inclusions. Cup and cone fracture occurred in the materials of both kinds, which was the typical ductility fracture.

**Table 2**

| | 0.2% proof stress | Strength | Elongation |
|---|---|---|---|
| | (MPa) | | (%) |
| A | 583 | 751 | 38 |
| B | 553 | 743 | 37 |
| A' | 640 | 955 | 41 |
| B' | 700 | 990 | 39 |

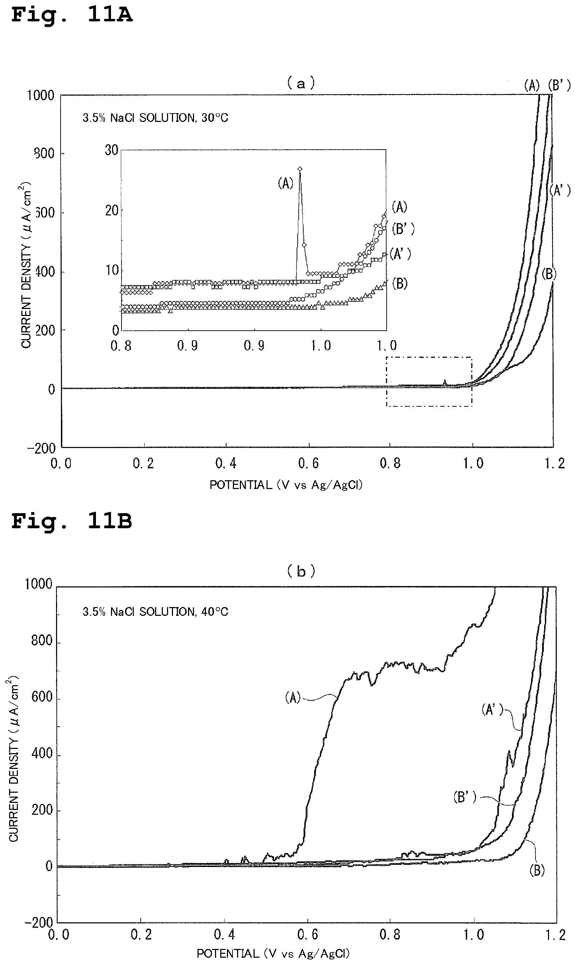

Figs. 11A and 11B show measurement results of pitting potentials of the specimens 1, 2 alloys and the specimens 3, 4 alloys (inclusions-reduced materials). As the two-phase stainless steel has excellent pitting corrosion resistance, pitting corrosion did not occur in the NaCl solution at 30°C.

However, in the specimen 1 alloy (material (A)), a sharp spike-pattern variation of current density was observed in the vicinity of 0.960 to 0.970 V. When using the NaCl solution at 40°C, the current density was increased with vibration of current values in the vicinity of 0.6 V, and the current density was rapidly increased at 1.0 V and higher than 1.0 V.

On the other hand, in the specimen 3 alloy (A'), the current density slightly changed in a spike pattern at a point higher than 1 V, however, large variation like the specimen 1 alloy (material (A)) was not observed. Vibrations in the current density indicates occurrence of pitting corrosion.

Inclusions of Mn are assumed to be the cause of occurrence of pitting corrosion, and it can be considered that pitting corrosion is liable to occur in the specimen 1 alloy (material (A)) and the specimen 3 alloy (A') containing Mn, and pitting corrosion is not liable to occur in the specimen 2 alloy (B) and the specimen 4 alloy (B') not containing Mn. In the specimen 3 alloy (A') obtained by performing reduction processing of inclusions to the specimen 1 alloy (material (A)) in which pitting corrosion is liable to occur, it has been found that occurrence of pitting corrosion was significantly suppressed.

In order to compare materials forming the diaphragm, SPRON510 (registered trademark: Seiko Instruments Inc.) having a composition of Ni: 31% (mass%, the same as below), Cr: 19%, Mo: 10.1%, Nb: 1.5%, Fe:2.1%, Ti: 0.8%, remaining part: Co was prepared as a specimen 5 alloy.

An alloy of JIS Standard SUS316L was prepared as a specimen 6, an alloy of JIS standard SUS329J4L was prepared as a specimen 7. SUS316L is an austenitic stainless steel having a composition ratio of C: 0.08% or less, Si: 1.0% or less, Mn: 2.0% or less, P: 0.045% or less, S: 0.03% or less, Ni: 11%, Cr: 18% and Mo: 2.5%, which was prepared as the specimen 6 alloy. SUS329J4L is a two-phase stainless steel having a composition ratio of C: 0.03% or less, Si: 1.0% or less, Mn: 1.5% or less, P: 0.04% or less, S: 0.03% or less, Ni: 6%, Cr: 25%, Mo: 3% and N: 0.1% which was prepared as the specimen 7 alloy.

As the specimen 5 alloy, an alloy which is a material to which homogenization heat treatment has been performed and obtained by being cooled in a furnace after being held at 1070°C for two hours was used. The specimen 6 alloy is an alloy which is a material to which homogenization heat treatment has been performed and obtained by being water-cooled from 1070°C. The specimen 7 alloy is an alloy which is a material to which homogenization heat treatment has been performed and obtained by being water-cooled from 1080°C, which is a specimen processed with a later-described surface reduction rate by using the cold swaging processing as described later.

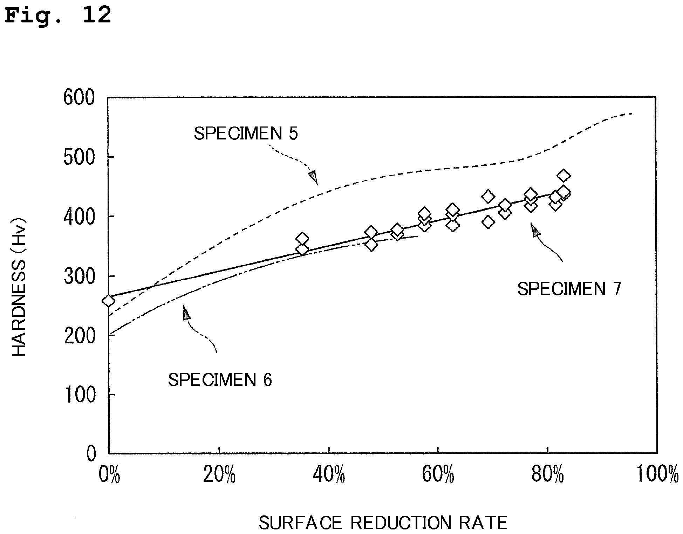

Fig. 12 is a graph showing variation of hardness (Hv) (Vickers hardness test, load: 300 gf, test time: 15 sec) by the swaging processing in the specimens 5, 6 and 7 alloys. All the specimen 5, 6 and 7 alloys have been work-hardened with the progress of the swaging processing. The hardness of the prepared specimen 5 alloy and the specimen 6 alloy are shown, which have been prepared for comparison. The degree of work hardening of the specimen 7 alloy is not as high as the specimen 5 alloy but is monotonically increased after the surface reduction rate becomes 60% and more, which differs from the specimen 6 alloy showing a saturation tendency. The specimen 5 alloy shows approximately 500 Hv at a surface reduction rate 80% and the specimen 7 alloy shows an approximately 400 Hv at the surface reduction rate 80%.

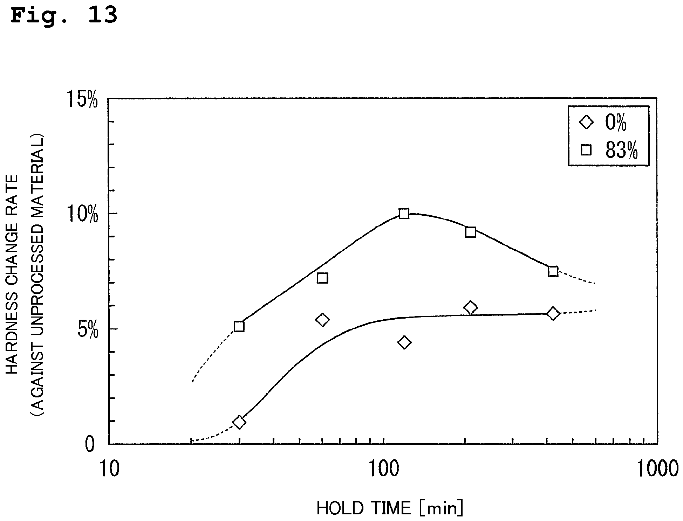

Fig. 13 shows the relation between the aging time and the hardness change rate at 350°C. The age hardening is prominent in the specimen with the surface reduction rate (processing rate) 83% shown by a mark □ in the drawing, and the increasing rate is the maximum when the aging time is 2 h (120 minutes). It has been known that stainless steel is not age-hardened particularly in the two-phase stainless steel except the precipitation hardening-type steel (which is disclosed in various documents including "Stainless steel manual"), however, the age hardening phenomenon of the specimen 7 alloy which is the two-phase stainless steel has been confirmed for the first time in the present embodiment.

It has been found that the hardness change rate of the specimen with the surface reduction rate (processing rate) 0% to which processing has not been performed is small.

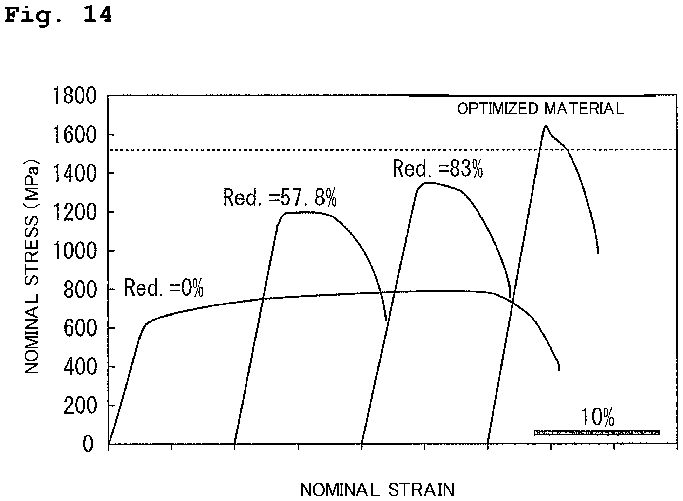

Fig. 14 is a graph showing the relation between the stress and the strain obtained by a tensile test (strain speed: 1.5 × 10⁻⁴ S⁻¹) of specimen alloys as the optimized materials to which aging heat treatment has been performed in the above optimization conditions (surface reduction rate 83%, 350°C, two-hours aging). A proof stress 1500 MPa is shown by a dotted line in the drawing, which is a boundary condition as the maximum target which has been obtained by referring to the related-art material of a Co-Ni based alloy for the diaphragm (SPRON510: registered trademark: Seiko Instruments Inc.). In the as-processed material (specimen without heat treatment) with Red. 83% (surface reduction rate 83%), even the maximum strength does not reach the maximum target 1500 MPa.

However, when the aging heat treatment was performed under the optimization conditions, a value sufficiently exceeded 1500 MPa which is the boundary as the maximum target can be obtained. 0.2% proof stress after the optimization (surface reduction rate 83%, 350°C, two-hours aging) was 1640 MPa.

It has been proved from test results shown in Fig. 14 that the unprocessed specimen alloy with the surface reduction rate 0% and the specimen alloys to which the swaging processing has been performed with the surface reduction rate 57.8% and 83% and to which the aging heat treatment has not been performed had the strength of approximately 1400 MPa even when the surface reduction rate has been increased, whereas, the specimen to which the swaging processing has been performed with the surface reduction rate 83% and to which the aging heat treatment has been performed showed proof stress exceeding 1600 MPa. The alloy specimen to which the swaging processing has been performed with the surface reduction rate 83% and to which the aging heat treatment has been performed not only has high proof stress but also has characteristics which are not brittle. In the above photomicrographs of the metal structures showing fracture surfaces of specimens to which the aging heat treatment has been performed under the optimization conditions, existence of dimples and a smooth surface can be recognized on the fracture surface, and it has been cleared that the existence of dimples on the fracture surface indicates that ductility fracture occurred. The existence of both dimples and the smooth surface on the fracture surface indicates that different fracture modes partially exist, which means that the fracture surface shows the ductility and is not brittle and fractural though the proof stress is high.

It has been also found that the target mechanical characteristics can be obtained as the surface reduction rate (processing rate) becomes high, which is 50% or more. When only a die diameter is considered in the swaging processing, it is possible to perform processing of 99.6% in conversion to the surface reduction rate from the start. However, the above rate will be lower than the use size of the pressure sensor as the product, therefore, the surface reduction ratio of approximately 90% may be the practical limitation. Accordingly, as the practical surface reduction ratio in consideration of products, a range of 50% to 90% can be selected. Naturally, a range of 60% to 90% is preferable for obtaining a higher target value in an aspect to mechanical characteristics, for example, for obtaining proof stress 1400 MPa or more, and a range of 83% to 90% is more preferable for obtaining proof stress 1600 MPa or more.

Concerning a period of time in the aging heat treatment, it is possible to select within a range of 2 to 10 hours according to the relation between the hardness change rate and the hold time shown in Fig. 13.

Next, the tensile test and observation of fracture surfaces were performed by using alloy specimens having compositions shown in Table 3 below.

The following Table 3 shows alloy compositions of general materials and cleanness materials (inclusions-reduced materials) including titanium alloy and stainless steel which have been used for the test. The ELI material is a kind of an alloy from which impurity elements such as N and H are removed. The impurity removed material of SUS316L is a material from which C, O, N and Mn are removed. Inclusions and precipitates are not formed easily by removing these elements.

**Table 3**

| | C | Si | Mn | P | S | Ni | Cr | Mo | N | H | Fe | O | Al | V | Ti |
|---|---|---|---|---|---|---|---|---|---|---|---|---|---|---|---|
| Ti-6AI-4V | 0.01 | | | | | | | | 0.01 | 0.001 | 0.14 | 0.19 | 6.09 | 4.00 | BAL |
| Ti-6AI-4V ELI | 0.01 | | | | | | | | <0.01 | <0.001 | 0.19 | 0.10 | 6.15 | 4.23 | BAL |
| SUS316L | 0.015 | 0.23 | 1.64 | 0.032 | 0.012 | 12.00 | 16.87 | 2.00 | | | BAL | | | | |
| SUS316L* | 0.008 | 0.27 | 0.25 | 0.026 | 0.002 | 14.72 | 16.69 | 2.25 | 0.0075 | 0.000 | BAL | 0.001 | 0.002 | | |
| SUS329J4L | 0.019 | 0.55 | 0.68 | 0.035 | 0.002 | 6.45 | 24.44 | 3.27 | 0.120 | | BAL | | | | |
| SUS329J4L** | 0.022 | | | 0.031 | 0.001 | 6.35 | 24.29 | 3.24 | 0.316 | | BAL | | | | |

| | | | | | | | | | | | | | | | |
|---|---|---|---|---|---|---|---|---|---|---|---|---|---|---|---|
| *Impurities-removed material **Material from which impurities have been removed | | | | | | | | | | | | | | | |

A Ti-alloy having a composition of Ti-6AI-4V shown in Table 3 received heat treatment at 950°C, water cooled and had cold plastic processing corresponding to the surface reduction rate 60% to obtain a Ti alloy specimen A₁, and the same processing as the above was performed to a Ti alloy represented by Ti-6AI-4V ELI to obtain a Ti alloy specimen A₁'.

An alloy represented by SUS316L shown in Table 3 received heat treatment at 1050°C, water cooled and had cold plastic processing corresponding to the surface reduction rate 86% to obtain an alloy specimen B₁ of SUS316L, and the same processing as the above was performed to a stainless steel represented by SUS316L* to obtain a stainless steel specimen B₁'.

A two-phase stainless steel represented by SUS329J4L shown in Table 3 received heat treatment at 1050°C, water cooled and had cold plastic processing corresponding to the surface reduction rate 86% to obtain a two-phase stainless steel specimen C₁, and the same processing as the above was performed to a two-phase stainless steel represented by SUS329J4L** to obtain a two-phase stainless steel specimen C₁'.

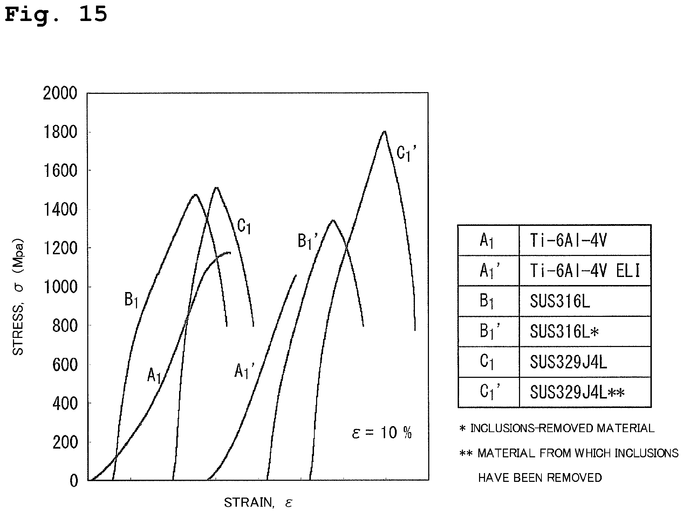

Fig. 15 show stress-strain diagrams by the tensile test of the Ti alloy specimens, the stainless steel specimens and the two-phase stainless steel specimens. The brittle fracture occurred both in the general material (A₁) and the impurity removed material (A₁') of the Ti alloy specimens. The stress-strain diagrams of the general material (B₁) and the impurity reduced material (B₁') of SUS316L were not straight lines in a low strain side, and gradients varied with the increase of the stress. These specimens softened and fractured just after reaching the maximum stress. The stress-strain diagrams of the general material (C₁) and the impurity reduced material (C₁') of SUS329J4L were not straight lines in the low strain side, and gradients varied with the increase of the stress. These specimens softened and fractured just after reaching the maximum stress.

In the Ti alloy, N, O and AI are α-phase stabilizing elements and V is a β-phase stabilizing element. Ti-6AI-4V is a two-phase alloy of α+β, controlling mechanical characteristics of materials in ratios of the α-phase and the β-phase. The α-phase in an hcp structure has a smaller number of slip systems than the β-phase in a bcc phase and process hardening can be easily performed, therefore, high strength can be obtained. In the ELI material, impurities of N and 0 are reduced, Al is lower and V is higher than the general material. That is, it is considered that the ELI material contains β-phase slightly higher. Accordingly, as the ratio of phases of the Ti-6AI-4V alloy is slightly different from the general materials, it can be assumed that the difference in strength occurred.

The gradient change occurring with the increase of the stress of the stainless steel in the lower strain side of the stress-strain diagrams is assumed to occur due to strain induced transformation. The dislocation density is extremely high due to prestrain of 86% in the cold plastic processing, and dislocations are not interlocked due to the interaction between dislocations, therefore, it can be considered that strain induced transformation assists the plastic deformation.

The following Table 4 shows results of data analysis of the tensile test performed as described above. UTS represents the ultimate tensile strength, and fracture strain represents strains at the time of fracture. The fracture strain energy is a value obtained by the integrating stress-strain diagram by the strain, representing energy per unit volume from the input of materials to the fracture. The stronger material has a higher energy.

**Table 4**

| | UTS (MPa) | Fracture strain (%) | Fracture strain energy × 10⁻³ (J/mm³) |
|---|---|---|---|
| Ti-6Al-4V | 1227 | 23.3 | 123.4 |
| Ti-6AI-4V ELI | 978 | 9.5 | 52.9 |
| SUS316L | 1473 | 13.6 | 136.4 |
| SUS316L* | 1323 | 13.3 | 104.2 |
| SUS329J4L | 1506 | 11.1 | 113.3 |
| SUS329J4L** | 1799 | 12.1 | 143.2 |

In Ti-6AI-4V and SUS316L, the strength was reduced and the fracture strain energy was reduced in materials from which impurities have been reduced. However, a high energy value was shown in SUS329J4L from which impurities have been reduced, which was different from the above alloys.

It can be considered that mechanical characteristics were reduced in Ti-6AI-4V and SUS316L as interstitial elements contributing to the strength are removed in the process of removing impurities. On the other hand, in SUS329J4L, additive elements to contribute to the increase of strength were not reduced in the process of removing impurities. It can be considered that the mechanical characteristics were improved as a consequence.

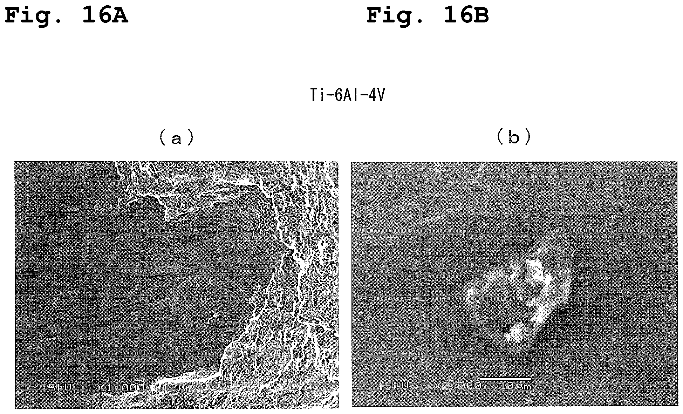

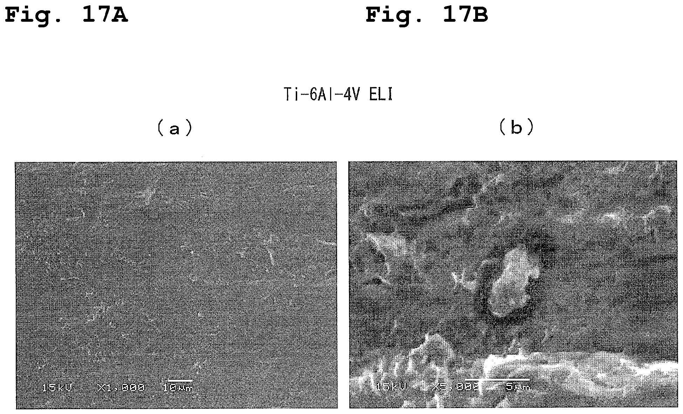

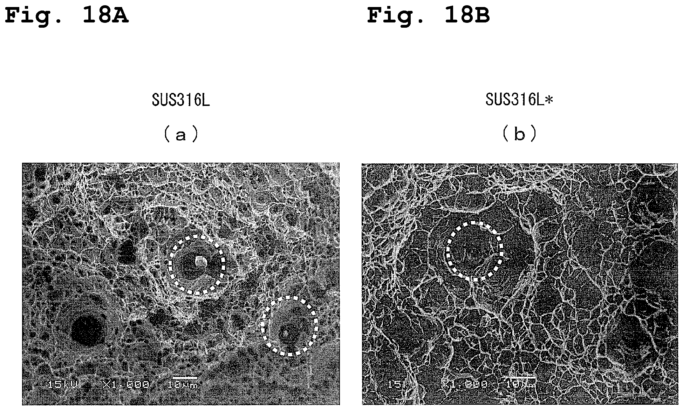

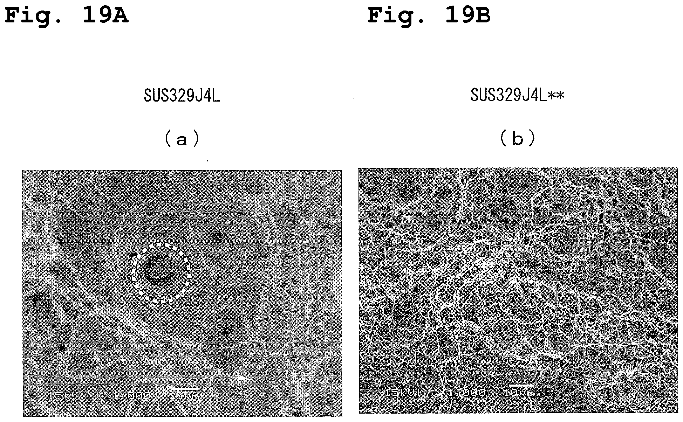

Figs. 16A and 16B are SEM micrographs (scanning electron micrographs) of fracture surfaces after performing the tensile test. The SEM micrographs of Fig. 16A and 16B show the general material specimen of Ti-6AI-4V, and Figs. 17A and 17B show the ELI material specimen of Ti-6AI-4V from which impurities have been removed. Furthermore, Fig. 18A shows a SEM micrograph of the general material specimen of SUS316L and Fig. 18B is a SEM micrograph of the SUS316L specimen from which impurities have been removed. Fig. 19A shows a SEM micrograph of the general material specimen of SUS329J4L and Fig. 19B is a SEM micrograph of the SUS329J4L specimen from which impurities have been removed.

As can be seen from the SEM microphotographs shown in Figs. 16A and 16B, cleavage fracture occurred in a fracture origin in the general material specimen of Ti-6AI-4V. In the vicinity of the fracture origin, inclusions containing Fe were observed (see Fig. 16B). In the Ti-6AI-4V specimen from which impurities have been removed, cleavage fracture occurred in a fracture origin as shown in Fig. 17A. Though the material was impurity removed material, inclusions having approximately 5 µm in major axis were observed as shown in Fig. 17B.

As shown in SEM micrograph shown in Fig. 18A, voids were observed in the fracture origin of the general material specimen of SUS316L (refer to Fig. 18A). In the voids, inclusions containing Al and Mn were observed. On the other hand, voids and inclusions were also observed in the fracture origin of SUS316L from which impurities have been removed (refer to Fig. 18B). The size of voids was smaller than that of the general material of SUS316L shown in Fig. 18A.

As shown in SEM micrograph shown in Fig. 19A, voids were observed in the fracture origin of the general material specimen of SUS329J4L (refer to Fig. 19A). In the voids, inclusions containing Ca were observed. On the other hand, inclusions were not recognized though small voids were observed in the fracture origin of SUS329J4L from which impurities have been removed (refer to Fig. 19B).

As described above, inclusions were not recognized in the fracture surface of the two-phase stainless steel specimen (SUS329J4L**) from which inclusions have been removed, and the ultimate tensile strength (UTS) in the tensile test was improved by removing inclusions. On the other hand, the ultimate tensile strength was not improved and inclusions were observed in the fracture surfaces in materials other than the two-phase stainless steel, therefore, the effect of removing inclusions in two-phase stainless steel can be confirmed.

## Claims

1. A two-phase stainless steel consisting of:
a composition of Cr: 24 to 26 mass %, Mo: 2.5 to 3.5 mass%, Ni: 5.5 to 7.5 mass %, C≤0. 03 mass %, N: 0.08 to 0.3 mass %, 0≤Mn≤2.0 mass%, 0≤Si≤1.0 mass%, remaining part: Fe and unavoidable impurities,
wherein the particle size of inclusion particles including an Al oxide or a Mn oxide caused by unavoidable impurities Al and Mn existing in a metal structure is 3 µm or less.

2. The two-phase stainless steel according to claim 1,
wherein the number of inclusion particles is 100 or less per 1 mm².

3. The two-phase stainless steel according to claim 1 or 2,
wherein 0.2% proof stress is 600 MPa or more.

4. A thin sheet material comprising:
the two-phase stainless steel according to any one of claims 1 to 3.

5. A diaphragm comprising:
the two-phase stainless steel according to any one of claims 1 to 3.

## Patentansprüche

1. Zweiphasiger Edelstahl, bestehend aus:
einer Zusammensetzung aus Cr: 24 bis 26 Masse%, Mo: 2,5 bis 3,5 Masse%, Ni: 5,5 bis 7,5 Masse%, C ≤ 0,03 Masse%, N: 0,08 bis 0,3 Masse%, 0 ≤ Mn ≤ 2,0 Masse%, 0 ≤ Si ≤ 1,0 Masse%, verbleibender Teil: Fe und unvermeidbare Unreinheiten,
wobei die Teilchengröße von Einschlussteilchen, enthaltend ein Al-Oxid oder ein Mn-Oxid, die durch unvermeidbare Al- und Mn-Unreinheiten verursacht werden, die in einer Metallstruktur vorhanden sind, 3 µm oder weniger ist.

2. Zweiphasiger Edelstahl nach Anspruch 1,
wobei die Anzahl von Einschlussteilchen 100 oder weniger pro 1 mm² ist.

3. Zweiphasiger Edelstahl nach Anspruch 1 oder 2,
wobei eine 0,2% Dehngrenze 600 MPa oder mehr ist.

4. Dünnes Blechmaterial, umfassend:
den zweiphasigen Edelstahl nach einem der Ansprüche 1 bis 3.

5. Membran, umfassend:
den zweiphasigen Edelstahl nach einem der Ansprüche 1 bis 3.

## Revendications

1. Acier inoxydable duplex formé par :
une composition de Cr : 24 à 26% en masse, Mo : 2,5 à 3,5% en masse, Ni : 5,5 à 7,5% en masse, C≤0,03% en masse, N : 0,08 à 0,3% en masse, 0≤Mn≤2,0% en masse, 0≤Si≤1,0% en masse, la partie restante : Fe et des impuretés inévitables,
dans lequel la taille de particule de particules d'inclusion comprenant un oxyde d'Al ou un oxyde de Mn causées par des impuretés inévitables d'Al et de Mn existant dans une structure métallique est de 3 µm ou moins.

2. Acier inoxydable duplex selon la revendication 1,
dans lequel le nombre de particules d'inclusion est de 100 ou moins par 1 mm².

3. Acier inoxydable duplex selon la revendication 1 ou 2, dans lequel une limite d'élasticité à 0,2% est de 600 MPa ou plus.

4. Matériau en feuille mince comprenant :
l'acier inoxydable duplex selon l'une quelconque des revendications 1 à 3.

5. Diaphragme comprenant :
l'acier inoxydable duplex selon l'une quelconque des revendications 1 à 3.
